# FASCICULE DE BREVET EUROPEEN

(11) **EP 2 653 077 B1**
(45) Date de publication et mention de la délivrance du brevet: **01.03.2017**
(21) Numéro de dépôt: 13174150.6
(22) Date de dépôt: 16.12.2009
(51) Int. Cl.: A47J 27/08

(54) **Appareil de cuisson sous pression à organe de commande du verrouillage / déverrouillage bi-fonctionnel**
Druckkochgerät mit bifunktionellem Steuerorgan zur Verriegelung/Entriegelung
Pressure-cooking device with dual-function locking / unlocking control element

(30) Priorité: 30.12.2008 FR 0859144
(43) Date de publication de la demande: 23.10.2013
(62) Demande divisionnaire de: 12163233.5
(73) Titulaire: SEB S.A., 69130 Ecully (FR)
(72) Inventeur: Chameroy, Eric, 21260 VERONNES (FR); Roussard, Philippe, 73340 LE NOYER (FR)
(74) Mandataire: Weber, Jean-François

(56) Documents cités:
- DE-B3-102004 056 463
- FR-A- 605 293

## Description

La présente invention se rapporte au domaine technique général des appareils de cuisson sous pression, et en particulier des appareils domestiques du genre autocuiseurs, comprenant une cuve et un couvercle destiné à être verrouillé sur la cuve pour former une enceinte de cuisson sensiblement étanche, lesdits appareils étant destinés à assurer la cuisson sous pression de vapeur d'aliments contenus dans la cuve.

La présente invention concerne plus particulièrement un appareil de cuisson d'aliments sous pression comprenant d'une part une cuve et un couvercle et d'autre part un organe de commande du verrouillage / déverrouillage du couvercle relativement à la cuve.

On connaît déjà des appareils de cuisson sous pression comprenant une cuve et un couvercle destiné à être verrouillé sur la cuve par l'intermédiaire d'un moyen de verrouillage / déverrouillage susceptible d'évoluer entre une position de verrouillage du couvercle et une position de déverrouillage. Un tel moyen de verrouillage / déverrouillage met par exemple en oeuvre une pluralité de mâchoires de verrouillage solidaires de bras entraîneurs disposés radialement sur le couvercle et dont le déplacement est commandé par un organe de commande monté sur le couvercle. L'utilisateur peut ainsi actionner l'organe de commande pour assurer le déplacement radial des mâchoires, soit en direction centrifuge, soit en direction centripète, pour positionner les mâchoires respectivement en position de déverrouillage ou en position de verrouillage. On connaît en particulier un appareil de cuisson sous pression dont l'organe de commande du verrouillage / déverrouillage est constitué par une poignée centrale montée à rotation sur le couvercle selon un axe de rotation perpendiculaire au plan moyen d'extension du couvercle. L'utilisateur peut ainsi commander le déplacement radial centripète et centrifuge des mâchoires en faisant tourner manuellement la poignée centrale en sens horaire et anti-horaire.

Outre cette fonction de commande du verrouillage / déverrouillage du couvercle, la poignée centrale est conformée pour assurer également un rôle d'organe de préhension, permettant à l'utilisateur de saisir et de porter le couvercle.

Cet autocuiseur de l'art antérieur donne globalement satisfaction, ce qui n'empêche pas qu'il pourrait néanmoins être encore amélioré.

En effet, la poignée centrale forme, à la surface du couvercle, une excroissance d'encombrement relativement important, dans la mesure où elle doit fournir à l'utilisateur une prise suffisante pour permettre la saisie et la manipulation du couvercle. Cet encombrement peut s'avérer gênant pour le stockage et le rangement du couvercle de l'autocuiseur, ainsi que pour son lavage en lave-vaisselle. En outre, l'utilisateur peut être en permanence tenté de soulever le couvercle par la poignée centrale, et ce même lorsque le couvercle est verrouillé sur la cuve. Cela peut ainsi conduire à une situation contre-indiquée dans laquelle l'utilisateur se sert de la poignée centrale pour soulever l'ensemble de l'appareil formé par la cuve et le couvercle verrouillé sur cette dernière. Une telle manipulation est dangereuse car compte-tenu du poids de la cuve, en particulier lorsque cette dernière est remplie d'eau et d'aliments, l'appareil peut très facilement échapper à l'utilisateur même si la prise procurée par la poignée centrale est de bonne qualité. De surcroît, utiliser la poignée centrale pour soulever et manipuler l'ensemble de l'appareil (cuve comprise) et non le couvercle seul peut entraîner une sollicitation mécanique importante du mécanisme de verrouillage qu'il est bien entendu préférable d'éviter.

Un autocuiseur connu est décrit dans DE102004056463B3.

Les objets assignés à l'invention visent en conséquence à porter remède aux divers inconvénients énumérés précédemment et à proposer un nouvel appareil de cuisson d'aliments sous pression qui, tout en étant de construction particulièrement simple, compacte et bon marché, est facile à ranger et à laver en lave-vaisselle, tout en étant particulièrement sûr à utiliser.

Un autre objet de l'invention vise à proposer un nouvel appareil de cuisson d'aliments sous pression qui limite considérablement, voire annule, le risque de voir un utilisateur soulever l'ensemble de l'appareil par le couvercle.

Un autre objet de l'invention vise à proposer un nouvel appareil de cuisson d'aliments sous pression particulièrement pratique à utiliser.

Un autre objet de l'invention vise à proposer un nouvel appareil de cuisson d'aliments sous pression particulièrement simple et fiable.

Un autre objet de l'invention vise à proposer un nouvel appareil de cuisson d'aliments sous pression particulièrement ergonomique et limitant les risques de voir le couvercle échapper à la prise de l'utilisateur.

Un autre objet de l'invention vise à proposer un nouvel appareil de cuisson d'aliments sous pression dont le fonctionnement est particulièrement sûr pour l'utilisateur.

Les objets assignés à l'invention sont atteints à l'aide d'un appareil de cuisson d'aliments sous pression comme défini dans la revendication 1.

D'autres particularités et avantages de l'invention apparaîtront et ressortiront plus en détails à la lecture de la description faite ci-après, en référence aux dessins annexés, donnés à titre d'exemple illustratif et non limitatif, dans lesquels :
- La figure 1 illustre, selon une vue générale en perspective, un appareil de cuisson d'aliments sous pression conforme à l'invention avec son organe de commande en position rétractée, ledit appareil de cuisson étant également pourvu d'un organe de pilotage de son fonctionnement se trouvant dans une première position dans laquelle il empêche sensiblement la montée en pression de l'appareil.
- La figure 2 illustre, selon une vue en perspective, un détail de réalisation de l'organe de commande du verrouillage / déverrouillage de l'appareil illustré à la figure 1.
- La figure 3 illustre, selon une vue de dessus, le détail de réalisation de la figure 2.
- La figure 4 illustre, selon une vue générale en perspective, l'appareil de la figure 1 dont l'organe de commande est toujours en position rétractée mais dont l'organe de pilotage se trouve cette fois dans une deuxième position dans laquelle il autorise la montée en pression de l'appareil.
- La figure 5 illustre, selon une vue en perspective, un détail de réalisation de l'organe de commande du verrouillage / déverrouillage de l'appareil illustré à la figure 4.
- La figure 6 illustre, selon une vue en perspective, le détail de réalisation de la figure 2 lorsque l'organe de commande du verrouillage / déverrouillage a quitté sa position rétractée et est en cours de déplacement vers sa position déployée.
- La figure 7 illustre, selon une vue de dessus, le détail de réalisation de la figure 6, l'organe de commande étant omis par souci de clarté.
- La figure 8 illustre, selon une vue générale en perspective, l'appareil des figures 1 à 7 avec l'organe de commande du verrouillage / déverrouillage en position déployée.
- La figure 9 illustre, selon une vue en perspective, un détail de réalisation de l'organe de commande du verrouillage / déverrouillage de l'appareil illustré à la figure 8.
- La figure 10 illustre, selon une vue de dessus, le détail de réalisation de la figure 9, l'organe de commande étant omis par souci de clarté.
- La figure 11 illustre, selon une vue en coupe, le détail de réalisation de la figure 9.
- La figure 12 illustre, selon une vue en perspective, le détail de réalisation des figures 9 à 11 lorsque l'organe de commande du verrouillage / déverrouillage a quitté sa position déployée et est en cours de déplacement vers la position rétractée.
- La figure 13 illustre, selon une vue de coté, le détail de réalisation de la figure 12, l'organe de commande du verrouillage / déverrouillage étant sur le point d'atteindre sa position rétractée.
- La figure 14 illustre, selon une vue de dessus, le détail de réalisation de la figure 13, l'organe de commande étant omis par souci de clarté.

L'appareil 1 de cuisson d'aliments sous pression conforme à l'invention est destiné à assurer la cuisson de différents aliments à un niveau de pression supérieur à la pression atmosphérique, de préférence dans un contexte domestique, étant entendu que l'invention peut également concerner des appareils professionnels ou semi-professionnels. L'appareil conforme à l'invention est donc avantageusement un ustensile de cuisine présentant un caractère portatif (c'est-à-dire qu'il peut être déplacé manuellement) et indépendant. De façon classique, l'appareil 1 conforme à l'invention est conçu pour monter en pression exclusivement sous l'effet d'une source de chauffe (embarqué ou externe), sans apport de pression externe.

De façon particulièrement préférentielle, l'appareil 1 de cuisson conforme à l'invention est un autocuiseur.

De façon classique, l'appareil 1 de cuisson sous pression conforme à l'invention comprend une cuve 2 formant récipient de cuisson et présentant avantageusement sensiblement une symétrie de révolution selon un axe X-X'.

Par la suite, l'adjectif « *axial* » se réfèrera à la direction de cet axe de symétrie X-X', direction qui s'apparente à la direction verticale lorsque l'appareil 1 est en fonctionnement normal, c'est-à-dire repose sur un plan horizontal. La cuve 2 est de manière classique fabriquée à partir d'un matériau métallique tel que l'acier inoxydable, et est par exemple pourvu d'un fond thermo-conducteur 2A solidarisé à la cuve par toute technique appropriée (par exemple par frappe à chaud). La cuve 2 peut comporter également des organes de préhension, tel que des poignées 2B, 2C préférentiellement au nombre de deux, et fixées sur la paroi latérale 2D de la cuve de façon diamétralement opposée par exemple.

L'appareil 1 conforme à l'invention comprend également un couvercle 3 destiné à être rapporté et verrouillé sur la cuve 2 pour former avec cette dernière une enceinte de cuisson sensiblement étanche, c'est-à-dire suffisamment hermétique pour permettre une montée en pression de l'appareil 1. Le couvercle 3 est avantageusement de forme générale discoïde, et s'étend avantageusement dans un plan moyen sensiblement parallèle au plan moyen d'extension du fond 2A de la cuve 2 lorsqu'il est rapporté et verrouillé sur cette dernière.

Le couvercle 3 peut donc être verrouillé ou déverrouillé sur la cuve 2 grâce à un moyen de verrouillage / déverrouillage 4 du couvercle 3 relativement à la cuve 2. Le verrouillage du couvercle 3 sur la cuve 2 permet à l'enceinte de cuisson de monter en pression sans risque de voir le couvercle échapper sous l'effet de la pression. Le moyen de verrouillage / déverrouillage 4 peut être de tout type connu de l'homme du métier, et est de façon classique susceptible d'évoluer entre une position de verrouillage du couvercle 3 relativement à la cuve 2, dans laquelle le couvercle 3 est solidarisé à la cuve 2, et une position de déverrouillage du couvercle 3 relativement à la cuve 2, dans laquelle le couvercle 3 peut être librement séparé de la cuve 2.

Le moyen de verrouillage/déverrouillage 4 est un moyen de verrouillage/déverrouillage à mâchoires ou à segments. Dans la variante préférentielle illustrée aux figures, le moyen de verrouillage / déverrouillage 4 du couvercle 3 relativement à la cuve 2 comprend deux mâchoires 4A, 4B montées mobiles en translation radiale sur et relativement au couvercle 3 par l'intermédiaire de bras entraîneurs correspondants 4C, 4D s'étendant de façon diamétralement opposée en regard de l'axe de symétrie général X-X' de l'appareil 1. Les mâchoires 4A, 4B sont ainsi montées, par l'intermédiaire des bras entraîneurs 4C, 4D, entre d'une part une position de verrouillage dans laquelle chaque mâchoire 4A, 4B enserre le couvercle 3 et le bord supérieur roulé de la cuve 2 et d'autre part une position de déverrouillage, obtenue par déplacement centrifuge des mâchoires 4A, 4B à partir de leur position de verrouillage, et dans laquelle les mâchoires 4A, 4B ne sont plus en prise avec le bord roulé de la cuve 2, ce qui permet à l'utilisateur de désolidariser librement le couvercle 3 de la cuve 2. De préférence, la position de verrouillage est une position de rappel, un
tel effet de rappel étant obtenu par exemple grâce à l'interposition d'un ressort reliant les bras entraîneurs 4C, 4D et rappelant ces derniers l'un vers l'autre. Chaque bras entraîneur 4C, 4D s'étend plus précisément entre une extrémité intérieure destinée à coopérer avec un organe de commande 6 du verrouillage / déverrouillage et une extrémité extérieure qui porte la mâchoire correspondante 4A, 4B. Chaque mâchoire 4A, 4B se présente quant à elle avantageusement sous la forme d'une plaque métallique profilée en U, tel que cela est bien connu de l'homme du métier.

Il est cependant tout à fait envisageable que l'extrémité extérieure de chaque segment 4C, 4D ne porte pas de mâchoire et soit simplement destinée à pénétrer dans des lumières correspondantes ménagées dans la cuve, à la manière d'un système pêne/gâche.

Un tel système de verrouillage de type pêne/gâche (non illustré), habituellement désigné sous l'appellation « *système de verrouillage à segments* », est bien connu en tant que tel, de sorte qu'il n'est pas nécessaire de le décrire plus avant.

L'appareil 1 de cuisson d'aliments sous pression conforme à l'invention comprend avantageusement un moyen de régulation de pression 5 monté en communication étanche avec un perçage correspondant (non représenté) ménagé dans le couvercle 3 et agencé pour maintenir la pression relative (c'est-à-dire la pression mesurée au-dessus de la pression atmosphérique) régnant dans l'enceinte à une valeur prédéterminée sensiblement constante, dite pression de fonctionnement. Le principe de fonctionnement général d'un tel moyen de régulation 5 est bien connu de l'homme du métier, de sorte qu'il n'est pas nécessaire de le décrire plus avant ici. Avantageusement, le moyen de régulation 5 est pourvu d'un système de tarage permettant à l'utilisateur de sélectionner une valeur de pression de fonctionnement prédéterminée parmi un choix de plusieurs niveaux de pression de fonctionnement, via un organe de sélection de pression, en fonction par exemple de la nature des aliments présents dans l'appareil 1. Avantageusement, le moyen de régulation de pression 5 est conçu pour que la pression de fonctionnement soit comprise dans une plage s'étendant sensiblement entre 10 et 90 kPa.

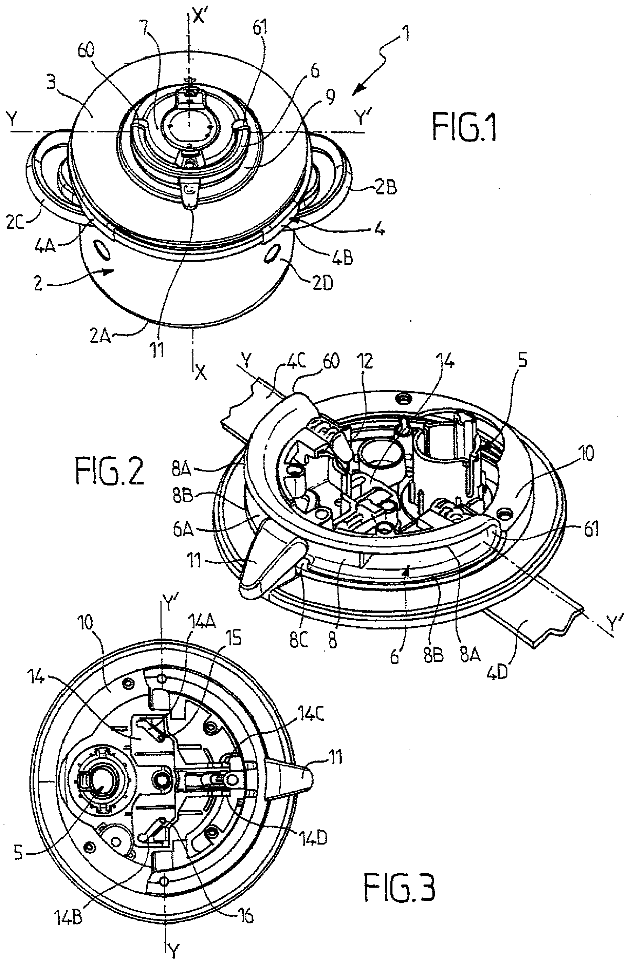

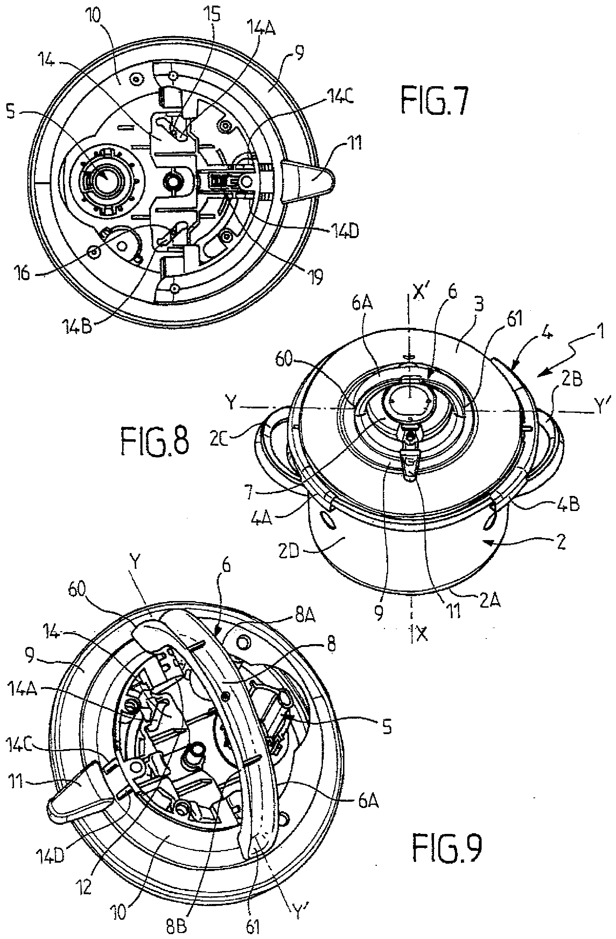

Comme évoqué précédemment, l'appareil de cuisson d'aliments 1 conforme à l'invention comprend également un organe de commande 6 du verrouillage / déverrouillage du couvercle 3 relativement à la cuve 2. L'organe de commande 6 est conçu pour être manipulé par l'utilisateur de façon à permettre à ce dernier de contrôler le moyen de verrouillage / déverrouillage 4, et de préférence le déplacement radial des bras entraîneurs 4C, 4D et des mâchoires correspondantes 4A, 4B. L'organe de commande 6 du verrouillage / déverrouillage du couvercle 3 relativement à la cuve 2 est monté mobile sur le couvercle 3 entre d'une part une position déployée (visible sur les figures 8, 9 et 11) correspondant au déverrouillage du couvercle 3, dans laquelle ledit organe de commande 6 est conçu pour être saisi manuellement afin de permettre la manipulation du couvercle 3 par l'utilisateur, et d'autre part une position rétractée (visible aux figures 1, 2, 4 et 5) correspondant au verrouillage du couvercle 3 dans laquelle ledit organe de commande 6 est conçu pour être plus difficile à saisir manuellement qu'il ne l'est en position déployée. Ainsi, l'organe de commande 6 est conçu pour pouvoir être déplacé manuellement par un utilisateur entre sa position déployée et sa position rétractée, et vice-versa. L'organe de commande 6 interagit avec le moyen de verrouillage / déverrouillage 4 pour que lorsque l'organe de commande 6 se trouve dans sa position déployée, le moyen de verrouillage / déverrouillage 4 se trouve en position de déverrouillage, c'est-à-dire que le couvercle 3 peut être librement rapporté sur, et enlevé de, la cuve 2, tandis que lorsque l'organe de commande 6 se trouve dans sa position rétractée, le moyen de verrouillage / déverrouillage 4 adopte alors sa position de verrouillage empêchant la désolidarisation du couvercle 3 et de la cuve 2. Le passage du moyen de verrouillage / déverrouillage 4 de sa position de verrouillage à sa position de déverrouillage est donc obtenu par déplacement manuel de l'organe de commande 6 de sa position rétractée à sa position déployée. Inversement, le passage du moyen de verrouillage / déverrouillage 4 de sa position déployée à sa position rétractée est obtenu par déplacement manuel de l'organe de commande 6 de sa position déployée à sa position rétractée. La position déployée de l'organe de commande 6 est une position de butée. Ceci permet de limiter les possibilités de mouvement de l'organe de commande 6 relativement au couvercle 3, et donc de sécuriser la manipulation du couvercle 3.

Afin d'améliorer encore la sécurité et le confort d'utilisation, la position déployée est de préférence une position stable, ce qui évite un retour intempestif de l'organe de commande 6 en position rétractée, avec toutes les conséquences négatives qu'un tel retour intempestif pourrait engendrer.

Réciproquement, la position rétractée est avantageusement une position de butée, ce qui permet de sécuriser le verrouillage. Pour cette même raison et de façon préférentielle, la position rétractée est une position stable.

Comme évoqué précédemment, l'organe de commande 6 est, lorsqu'il se trouve en position déployée, conçu pour être saisi manuellement afin de permettre la manipulation du couvercle 3 par l'utilisateur. Cela signifie qu'en position déployée, l'organe de commande 6 adopte une forme de poignée permettant à l'utilisateur de manipuler, c'est-à-dire de saisir fermement et de soulever, le couvercle 3, afin de le déplacer d'un endroit à un autre, et par exemple pour le placer sur la cuve 2 ou au contraire l'enlever de la cuve 2. En d'autres termes, l'organe de commande 6 présente, dans sa position déployée, une forme et des dimensions suffisantes pour permettre une prise directe, ferme et assurée dudit organe de commande 6 par l'utilisateur, la prise ainsi procurée permettant à l'utilisateur de supporter fermement le poids du couvercle 3. A cette fin, différentes conformations de l'organe de commande 6 sont envisageables, comme par exemple une forme d'anse (variante illustrée aux figures) ou une forme en T, en L, une forme de pommeau, de bouton évasé, etc. Ainsi, l'appareil 1 comprend un organe de préhension du couvercle 3 qui est attaché au couvercle 3 et est conçu pour être saisi manuellement afin de permettre la manipulation du couvercle 3 par son intermédiaire, ledit organe de préhension étant uniquement formé par ledit organe de commande 6 en position déployée. En d'autres termes, l'organe de commande 6 est l'unique moyen spécifiquement conçu pour être saisi manuellement (en position déployée) afin de manipuler le couvercle 3 par son intermédiaire.

En revanche, l'organe de commande 6 est, en position rétractée, plus difficile à saisir manuellement par l'utilisateur qu'il ne l'est en position déployée, c'est-à-dire que la configuration géométrique de l'organe de commande 6, et par exemple son orientation par rapport au couvercle 3 auquel il est attaché, font qu'il est plus difficile pour un même utilisateur d'attraper fermement l'organe de commande 6, cette difficulté étant avantageusement suffisante pour dissuader l'utilisateur de se servir de l'organe de commande 6 en position rétractée comme d'une poignée pour manipuler, c'est-à-dire soulever et déplacer le couvercle 3.

Ainsi, l'organe de commande 6 du verrouillage / déverrouillage du couvercle 3 relativement à la cuve 2 assure la triple fonction suivante :
- fonction de commande du verrouillage / déverrouillage, permettant par exemple à l'utilisateur de commander le déplacement des mâchoires 4A, 4B entre leur position de verrouillage et leur position de déverrouillage ;
- fonction de préhension, permettant à l'utilisateur de saisir le couvercle 3 par l'organe de commande 6 lorsque ce dernier est en position déployée ;
- et fonction de sécurité, permettant de limiter la possibilité pour l'utilisateur de saisir le couvercle 3 par l'organe de commande 6 lorsque ce dernier se trouve en position rétractée qui correspond au verrouillage du couvercle 3 sur la cuve 2.

L'organe de commande 6 présente donc une aptitude variable à la préhension, aptitude qui varie en fonction de la position de l'organe de commande 6, laquelle est elle-même liée à l'état de verrouillage et de déverrouillage du moyen de verrouillage / déverrouillage 4 du couvercle 3 relativement à la cuve 2. Par conséquent, l'invention permet de limiter le risque de voir un utilisateur envisager ou même être en mesure de manipuler le couvercle 3 alors que ce dernier est verrouillé sur la cuve 2.

Avantageusement, l'organe de commande 6 est, en position rétractée, conçu pour être sensiblement impossible à saisir manuellement, par l'utilisateur, pour manipuler le couvercle 3. En d'autres termes, dans ce cas de figure préférentiel qui correspond à la variante illustrée, l'organe de commande 6 est sensiblement complètement escamoté en position rétractée, de sorte que l'utilisateur ne dispose plus d'aucune surface de prise suffisante pour permettre une préhension du couvercle 3 par l'organe de commande 6. Ceci n'interdit toutefois pas que, comme dans la variante illustrée aux figures, l'organe de commande 6 présente une aptitude à être manipulée par l'utilisateur pour passer de sa position rétractée à sa position déployée, c'est-à-dire que l'organe de commande 6 permet une prise qui est suffisante pour le déplacement manuel de l'organe de commande 6 de sa position rétractée à sa position déployée mais qui est insuffisante pour permettre une manipulation du couvercle 3.

Avantageusement, l'organe de commande 6 s'étend, dans sa position déployée, à partir du couvercle 3 selon une direction moyenne majoritairement perpendiculaire au plan moyen d'extension du couvercle 3, et de façon encore plus préférentielle selon une direction sensiblement parallèle à la direction verticale, matérialisée par l'axe X-X'. Dans la variante préférentielle illustrée aux figures, le plan moyen d'extension du couvercle 3 est sensiblement parallèle au plan de la feuille sur laquelle sont dessinées les figures 3, 7, 10 et 14. Par « *direction moyenne majoritairement perpendiculaire* », on désigne une direction présentant une composante verticale (c'est-à-dire parallèle à l'axe X-X') supérieure à sa composante horizontale (perpendiculaire à l'axe X-X'). De préférence, comme exposé dans ce qui précède, l'organe de commande 6 s'étend à la verticale du couvercle 3, mais il n'est absolument pas exclu qu'il puisse s'étendre de façon oblique, l'essentiel étant qu'il fournisse un moyen de préhension suffisant à l'utilisateur. Avantageusement, l'organe de commande 6 s'étend, dans sa position rétractée, à partir du couvercle 3 selon une direction moyenne majoritairement parallèle au plan moyen d'extension du couvercle 3, et de préférence selon une direction sensiblement horizontale, c'est-à-dire perpendiculaire à l'axe X-X' et inscrite dans un plan parallèle à celui du plan moyen d'extension du couvercle 3. En d'autres termes, l'organe de commande 6 est avantageusement conçu pour faire saillie verticalement à la surface du couvercle 3 en position déployée, et être rabattu contre et le long du couvercle 3, de préférence parallèlement à ce dernier, en position rétractée.

L'organe de commande 6 est monté à pivotement sur le couvercle 3 entre ses positions déployée et rétractée, selon un axe de pivotement Y-Y' qui s'étend lui-même selon une direction moyenne majoritairement parallèle au plan moyen d'extension du couvercle 3. Ledit axe de pivotement Y-Y' étant donc avantageusement perpendiculaire à l'axe X-X'. De façon avantageuse, afin de permettre une manipulation équilibrée du couvercle 3 et simplifier la conception globale de l'appareil 1, l'organe de commande 6 est centré sur le couvercle 3, de sorte que dans ce cas l'axe de pivotement Y-Y' est avantageusement sécant avec l'axe X-X' correspondant à la direction verticale. Avantageusement, l'organe de commande 6 est conçu pour se déplacer selon un débattement angulaire sensiblement égal à 90° entre une position rabattue, correspondant à la position rétractée, dans laquelle l'angle formé entre le plan moyen d'extension du couvercle 3 et le plan moyen d'extension de l'organe de commande 6 est sensiblement nul, et une position dépliée, correspondant à la position déployée, dans laquelle l'angle entre le plan moyen d'extension du couvercle 3 et le plan moyen d'extension de l'organe de commande 6 est sensiblement de 90°.

Une telle conception permet de différencier de façon particulièrement claire la configuration déployée de la configuration rétractée, ce qui permet à l'utilisateur de déduire en un coup d'oeil que le couvercle 3 est verrouillé. En outre, l'angle entre les plans moyens d'extension du couvercle 3 et de l'organe de commande 6 étant sensiblement nul en position rétractée, l'utilisateur est de toute manière dans l'impossibilité pratique d'utiliser l'organe de commande 6 en tant qu'organe de préhension du couvercle 3, ce qui contribue à la sécurité d'utilisation de l'appareil 1.

L'invention concerne d'ailleurs en tant que tel, indépendamment des autres aspects décrits ici, un appareil 1 de cuisson d'aliments sous pression comprenant d'une part une cuve 2 et un couvercle 3 et d'autre part un organe de commande 6 du verrouillage / déverrouillage du couvercle 3 relativement à la cuve 2, ledit organe de commande 6 étant formé d'une poignée de préhension conçue pour être saisie manuellement afin de permettre la manipulation du couvercle 3, ladite poignée de préhension étant montée mobile, de préférence à pivotement selon un axe sensiblement perpendiculaire à l'axe vertical X-X', entre une position rabattue contre le couvercle 3, correspondant au verrouillage du couvercle 3 sur la cuve 2, et une position dépliée, correspondant au déverrouillage du couvercle 3.

Avantageusement, l'organe de commande 6 comprend une anse 6A, c'est-à-dire une pièce arquée, en forme de boucle, avantageusement conçue pour être saisie fermement et à pleine main par l'utilisateur. L'anse 6A est avantageusement conçue pour faire saillie du couvercle 3 en position déployée, et pour être rabattue contre le couvercle 3 en position rétractée, comme illustré aux figures. Le recours à un organe de commande 6 en forme d'anse 6A est particulièrement préféré, car il permet une prise particulièrement ferme et assurée par l'utilisateur tout en étant facilement escamotable. En particulier, il est avantageux que le couvercle 3 présente à sa surface un relief 7 dont la forme est de préférence sensiblement complémentaire de celle de l'espace vide 6B délimité par l'anse 6A et destiné à recevoir les doigts de l'utilisateur.

Ainsi, lorsque l'anse 6A est complètement rabattue contre le couvercle 3, parallèlement à ce dernier, en position rétractée, l'espace vide 6B est au moins partiellement comblé par le relief 7, de sorte que l'anse 6A s'étend alors avantageusement dans la continuité du relief 7, limitant ainsi la possibilité pour l'utilisateur d'attraper, malgré tout, l'anse 6A pour manipuler le couvercle 3. En d'autres termes, le couvercle 3 présente à sa surface un relief 7 conçu pour au moins partiellement combler ledit espace vide 6B lorsque l'anse 6A est rabattue contre le couvercle 3 en position rétractée, limitant ainsi la possibilité pour l'utilisateur d'attraper l'anse 6A pour manipuler le couvercle 3.

Le recours à une anse 6A constitue d'ailleurs une invention en tant que telle, indépendamment des autres aspects décrits ici. Cet aspect inventif concerne ainsi plus précisément un appareil 1 de cuisson d'aliments sous pression comprenant d'une part une cuve 2 et un couvercle 3 et d'autre part un organe de commande 6 du verrouillage / déverrouillage du couvercle 3 relativement à la cuve 2, ledit organe de commande 6 étant formé par une anse 6A.

De préférence, l'organe de commande 6 présente sensiblement un contour en arc de cercle, comme illustré aux figures. Dans ce cas, ladite anse 6A s'étend avantageusement selon un contour sensiblement hémicirculaire entre une première extrémité 60 et une deuxième extrémité 61 sensiblement traversées par ledit axe de pivotement Y-Y', lesdites première et deuxième extrémités 60, 61 étant ainsi disposées de façon sensiblement diamétralement opposée relativement à l'axe X-X'. En d'autres termes, l'anse 6A présente dans ce cas sensiblement une forme d'arche correspondant avantageusement à un demi-cercle dont le diamètre est choisi pour permettre à l'utilisateur de glisser, dans l'orifice 6B délimité par ladite arche et le couvercle 3, au moins deux doigts (par exemple l'index et le majeur), et de préférence au moins trois doigts (index, majeur et annulaire), un espace suffisant pour permettre l'introduction de quatre doigts (index, majeur, annulaire et auriculaire) étant préféré.

Un contour de forme en arc de cercle, et en particulier hémicirculaire, est particulièrement confortable pour l'utilisateur et autorise en outre une sécurisation spécifique du fonctionnement de l'appareil 1 décrit dans ce qui suit. Selon ce mode de réalisation sécurisé spécifique, qui est illustré aux figures, l'organe de commande 6, constitué en l'occurrence par l'anse 6A hémicirculaire, est pourvu d'une gorge 8 qui suit le contour de l'anse 6A, et qui s'étend donc sensiblement en arc de cercle, et de préférence selon un demi-cercle comme illustré.

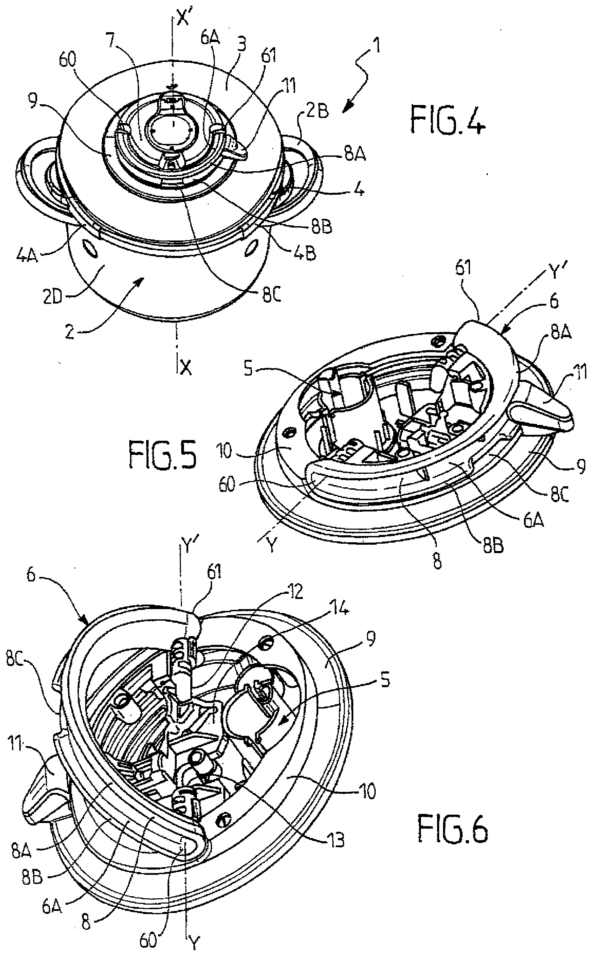

L'appareil 1 comprend en outre un organe de pilotage de son fonctionnement 9 monté mobile à rotation sur le couvercle 3, selon un axe de rotation passant par le centre dudit arc de cercle selon lequel s'étend la gorge 8 et sensiblement perpendiculaire au plan moyen dans lequel s'étend ladite gorge 8 lorsque l'organe de commande 6 est en position rétractée. Dans la variante illustrée aux figures, l'axe de rotation de l'organe de pilotage 9 correspond à l'axe X-X'. Avantageusement, l'organe de pilotage 9 du fonctionnement de l'appareil 1 est monté mobile à rotation sur le couvercle 3 entre une première position (illustrée aux figures 4 et 5), dans laquelle ledit organe de pilotage 9 autorise la montée en pression de l'appareil 1 et une deuxième position (illustrée aux figures 1 et 2) dans laquelle ledit organe de pilotage 9 empêche sensiblement la montée en pression. Par exemple, la première position correspond à un état actif du moyen de régulation 5, c'est-à-dire que la soupape de régulation de pression de l'appareil 1 est active et peut réguler la pression au sein de l'appareil 1. En revanche, lorsque l'organe de pilotage 9 se trouve dans sa deuxième position, alors le moyen de régulation 5 est désactivé, c'est-à-dire par exemple que la soupape de régulation correspondante est soulevée hors de son siège, afin de permettre une mise en communication permanente de l'intérieur de l'enceinte de cuisson avec l'extérieur, empêchant ainsi une montée en pression de l'appareil 1 (et permettant la décompression de l'appareil 1 le cas échéant). Dans ce cas, la première position de l'organe de pilotage 9 correspond à une position de cuisson, tandis que la deuxième position correspond à une position de décompression. Avantageusement, l'organe de pilotage 9 permet de sélectionner plusieurs positions de cuissons différentes, correspondant chacune à un tarage différent de la soupape formant moyen de régulation 5. L'organe de pilotage 9 forme donc dans ce cas un sélecteur de pression qui commande en outre la décompression de l'appareil.

Dans l'exemple illustré aux figures, l'organe de pilotage 9 est constitué par une pièce en forme de couronne qui entoure de façon concentrique, autour de l'axe X-X', une platine circulaire 10 attachée au couvercle 3 et sur laquelle est montée à pivotement l'anse 6A. Le relief 7 est dans ce cas avantageusement constitué par un capot monté sur la platine circulaire 10 pour masquer le mécanisme de commande.

L'organe de pilotage 9 est avantageusement pourvu d'un verrou 11, lequel est de préférence attaché de façon fixe à la couronne constituant l'organe de pilotage 9. Le verrou 11 est donc avantageusement embarqué sur l'organe de pilotage 9, et tourne donc avec ce dernier autour de l'axe X-X', ledit axe X-X' passant également avantageusement par le centre de l'arc de cercle selon lequel s'étend la gorge 8. Avantageusement, le verrou 11 est conçu pour coopérer avec la gorge 8 de la façon suivante :
- L'organe de commande 6, constitué en l'espèce par l'anse 6A, est conformé pour autoriser la pénétration du verrou 11 dans la gorge 8 uniquement lorsque l'organe de pilotage 9 se trouve dans sa deuxième position (illustrée aux figures 1 et 2) et que l'organe de commande 6 passe de sa position déployée à sa position rétractée. En d'autres termes, l'organe de commande 6 est conformé pour que lorsqu'il est rabattu, à partir de sa position déployée, vers et jusqu'à sa position rétractée, le verrou 11 puisse pénétrer dans la gorge 8 au moment où l'organe de commande 6 atteint sa position rétractée. L'appareil 1 se trouvera alors dans une configuration illustrée aux figures 1 et 2, dans laquelle l'organe de commande 6 se trouve dans sa position rétractée tandis que le verrou 11 est inséré, au moins en partie, dans la gorge 8. Afin de permettre cette introduction du verrou 11 dans la gorge 8, cette dernière est délimitée avantageusement par un rebord supérieur 8A et un rebord inférieur 8B sensiblement parallèle et continu, perpendiculaire au fond de la gorge, le rebord inférieur 8B présentant une échancrure 8C permettant le passage du verrou 11 lorsque ce dernier se trouve dans sa deuxième position et que l'organe de commande 6 est rabattu contre le couvercle 3 en position rétractée. Réciproquement, l'organe de commande 6 est avantageusement conformé pour ne pouvoir passer de sa position rétractée à sa position déployée que lorsque l'organe de commande 9 se trouve dans sa deuxième position.
- Une fois dans la gorge 8, le verrou 11 peut coulisser le long de cette dernière, qui s'étend rappelons-le selon un contour circulaire, autorisant ainsi l'organe de pilotage 9 à passer de sa deuxième position à sa première position, la présence du verrou 11 dans la gorge 8 interdisant toutefois à l'organe de commande 6, constitué en l'espèce par l'anse 6A, de retourner dans sa position déployée alors que l'organe de pilotage 9 se trouve dans sa première position, puisque le verrou 11 n'est plus dans ce cas en regard de l'échancrure 8C et vient en appui de blocage contre le rebord inférieur 8B délimitant la gorge 8.

Ainsi, la conformation circulaire de l'organe de commande 6 permet de créer un chemin de guidage pour le verrou 11, de sorte qu'une fonction de verrouillage en position rétractée de l'organe de commande 6 particulièrement fiable et simple peut être obtenue, qui constitue d'ailleurs une invention en tant que telle.

Le fonctionnement de la variante particulière illustré aux figures va maintenant être décrit chronologiquement.

Tout d'abord, l'appareil 1 est en configuration de cuisson, c'est-à-dire que son couvercle 3 est rapporté et verrouillé, grâce au moyen de verrouillage / déverrouillage 4, sur la cuve 2. Dans cette configuration, illustrée aux figures 4 et 5, l'organe de commande 6, comprenant en l'espèce l'anse 6A, se trouve en position rétractée, et est immobilisé dans cette position par le verrou 11. Dans cette configuration, l'anse 6A se trouve ainsi dans la continuité du relief 7 formé par le capot monté sur la platine 10, de sorte que le couvercle 3 présente globalement un aspect relativement lisse, sans qu'aucun organe ressemblant à une poignée ou pouvant faire office de poignée n'apparaisse aux yeux de l'utilisateur. En outre, quand bien même l'utilisateur voudrait malgré tout tenter de faire pivoter l'anse 6A pour l'utiliser en tant qu'organe de préhension, il en serait de toute façon empêché par le verrou 11 qui immobilise en position rétractée l'anse 6A. A la fin du cycle de cuisson, l'utilisateur fait pivoter l'organe de pilotage 9 autour de l'axe X-X' pour ramener ledit organe de pilotage 9 dans sa deuxième position (illustrée aux figures 1 et 2) ce qui entraîne le soulèvement de la soupape de régulation hors de son siège et ainsi la dépressurisation de l'appareil 1 par mise en communication de l'intérieur de l'enceinte de cuisson avec l'extérieur.

Dans cette configuration, illustrée aux figures 1 et 2, le verrou 11 se trouve en regard de l'échancrure 8C ménagée dans le bord inférieur 8B. Il est alors possible à l'utilisateur, et sous réserve que d'autres moyens de sécurité à l'ouverture (non illustrés) l'y autorisent en fonction de la pression régnant dans l'enceinte de cuisson, de ramener l'anse 6A dans sa position déployée, par pivotement selon une course angulaire de 90° autour de l'axe de pivotement Y-Y'. Ce trajet de la position rétractée vers la position déployée est illustré à la figure 6. La rotation de l'anse 6A entraîne la rotation concomitante d'une paire de cames 12, 13 montées respectivement aux première et deuxième extrémités 60, 61 de l'anse 6A. Chaque came 12, 13 vient ainsi pousser sur une pièce intermédiaire de commande 14 montée à translation sur la platine 10 selon un axe sensiblement perpendiculaire à la fois à l'axe de pivotement Y-Y' et à l'axe de symétrie global X-X'. La pièce intermédiaire de commande 14 est ainsi repoussée par les cames 12, 13 sous l'effet du pivotement de l'organe de commande 6 de sa position rétractée vers sa position déployée. Afin de garantir un contact permanent entre les cames 12, 13 et la plaque de commande intermédiaire 14, cette dernière est soumise à l'action d'un ressort de rappel 19 (représenté uniquement sur les vues de dessus des figures 3, 7, 10 et 14) qui pousse en permanence la plaque intermédiaire de commande 14 contre lesdites cames 12, 13.

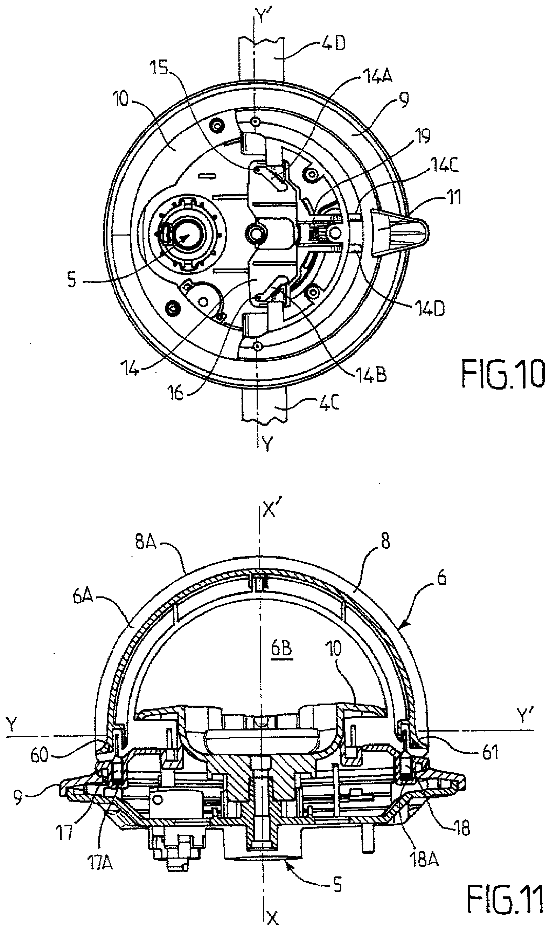

La pièce de commande 14 est pourvue classiquement de lumières obliques 14A, 14B coopérant avec des ergots 15, 16 reliés respectivement aux bras entraîneurs 4C, 4D, vers l'extrémité intérieure de ces derniers. Ainsi, le déplacement en translation de la plaque de commande intermédiaire 14 entraîne, par l'intermédiaire des lumières 14A, 14B, le déplacement radial des ergots 15, 16, et donc des bras entraîneurs 4C, 4D auxquels ces derniers sont respectivement attachés. Un tel principe de commande du déplacement radial des bras entraîneurs 4C, 4D est bien connu en tant que tel, et est par exemple décrit dans le document FR-2 863 849 A1 dont le contenu est incorporé par référence. Ainsi, la plaque intermédiaire de commande 14 repousse, par ses lumières 14A, 14B, les bras entraîneurs 4C, 4D vers l'extérieur, de façon radiale centrifuge, ce qui écarte les mâchoires 4A, 4B du bord roulé de la cuve 2. Le trajet de l'anse 6A se poursuit jusqu'à ce que l'anse 6A atteigne une position de butée (cf. figure 10 et 11) dans laquelle ladite anse 6A s'étend verticalement au droit du couvercle 3.

Cette position correspond à l'écartement mutuel maximal des mâchoires 4A, 4B, écartement qui correspond à la position de déverrouillage. Cette position déployée de l'organe de commande 6 est avantageusement une position stable, grâce à l'action de pions verticaux coulissants 17, 18 qui pénètrent dans une contre-forme appropriée ménagée dans l'anse 6A, vers l'extrémité correspondante 60, 61 de cette dernière. A cette fin, chaque pion 17, 18 est monté à translation verticale sur la platine 10 et est soumis à l'action d'un ressort de rappel correspondant 17A, 18A qui pousse en permanence chaque pion 17, 18 contre l'anse 6A.

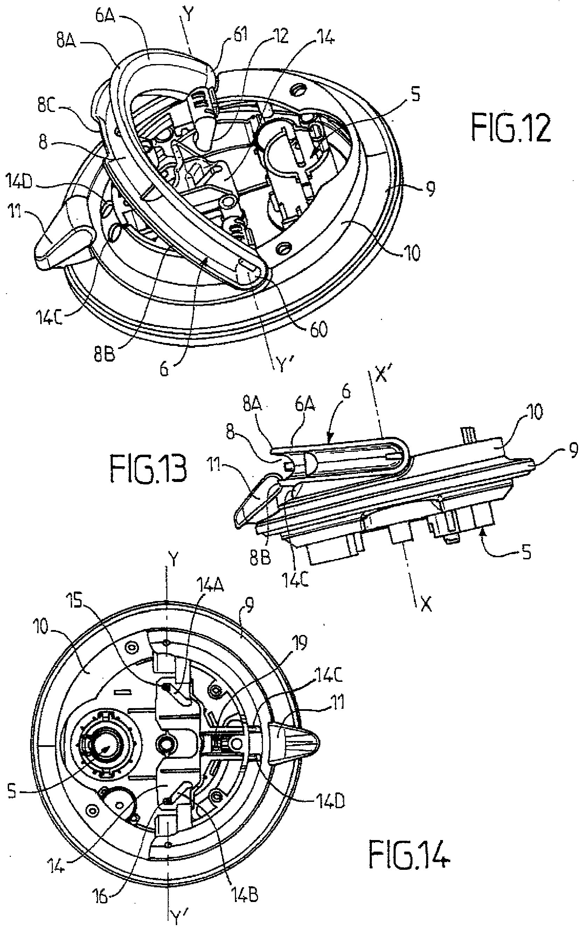

L'utilisateur peut alors saisir avec l'une de ses mains l'arche 6A, de façon ferme et assurée, et soulever ainsi le couvercle 3 pour le dissocier de la cuve 2. La préhension du couvercle 3 se fait donc de façon particulièrement pratique, grâce à une poignée particulièrement ergonomique constituée par l'anse 6A qui fait saillie du couvercle 3. Il est bien entendu tout à fait loisible à l'utilisateur, afin de faciliter le rangement du couvercle 3 ou son placement dans un lave-vaisselle, de rabattre ensuite l'anse 6A. A cette fin, l'utilisateur ramène l'anse 6A à partir de sa position déployée jusqu'à sa position rétractée. Ce trajet est illustré par les figures 12 et 13. Durant la quasi-totalité de ce trajet de repliement de l'anse 6A contre le couvercle 3, les cames 12, 13 ne sont de préférence plus en contact avec la plaque intermédiaire de commande 14 qui est restée bloquée dans sa position illustrée à la figure 10, correspondant au déverrouillage du couvercle 3. Cet effet de blocage est obtenu par une conformation appropriée des lumières 14A, 14B bien connue en tant que telle et qui ne nécessite donc pas d'être décrite plus avant ici. A l'approche de sa position rétractée, comme illustré à la figure 13, l'anse 6A vient appuyer sur une gâchette constituée en l'espèce de deux nervures arrondies 14C, 14D solidaires de la plaque intermédiaire de commande 14. L'anse 6A, en appuyant sur ces nervures 14C, 14D, repousse la plaque de commande intermédiaire 14 hors de sa position stable de sorte que sous l'effet de l'action du ressort 19 et de celle du ressort rappelant les bras entraîneurs l'un vers l'autre, la plaque de commande intermédiaire 14 est brutalement propulsée jusque dans sa position correspondant au verrouillage des mâchoires.

## Revendications

1. Appareil (1) de cuisson d'aliments sous pression comprenant une cuve (2), un couvercle (3), un moyen de verrouillage / déverrouillage (4) du couvercle (3) relativement à la cuve (2), et un organe de commande (6) du verrouillage / déverrouillage du couvercle (3) relativement à la cuve (2), **caractérisé en ce que** ledit organe de commande (6) est monté à pivotement sur le couvercle (3) selon un axe de pivotement (Y-Y') entre d'une part une position déployée correspondant au déverrouillage du couvercle (3) et dans laquelle ledit organe de commande (6) est conçu pour être saisi manuellement afin de permettre la manipulation du couvercle (3), et d'autre part une position rétractée correspondant au verrouillage du couvercle (3) et dans laquelle ledit organe de commande (6) est conçu pour être plus difficile à saisir manuellement qu'il ne l'est en position déployée, ledit moyen de verrouillage / déverrouillage (4) comprenant des mâchoires ou des segments montés mobiles en translation radiale sur et relativement au couvercle (3) selon un axe de translation parallèle audit axe de pivotement (Y-Y'), par l'intermédiaire de bras entraîneurs correspondants (4C, 4D) s'étendant de façon diamétralement opposée en regard de l'axe de symétrie général (X-X') de l'appareil (1), ce dernier comprenant des cames (12, 13) et une pièce intermédiaire de commande (14) conçue pour être repoussée par les cames (12, 13) sous l'effet du pivotement de l'organe de commande (6) de sa position rétractée vers sa position déployée, ladite pièce intermédiaire de commande (14) étant pourvue de lumières obliques (14A, 14B) coopérant avec des ergots (15, 16) reliés respectivement aux bras entraîneurs (4C, 4D), de sorte que le déplacement en translation de la plaque de commande intermédiaire (14) entraîne, par l'intermédiaire des lumières (14A, 14B), le déplacement radial des ergots (15, 16), et donc des bras entraîneurs (4C, 4D) auxquels ces derniers sont respectivement attachés.

2. Appareil (1) selon la revendication 1 **caractérisé en ce que** ladite position déployée est une position stable.

3. Appareil (1) selon la revendication 1 ou 2 **caractérisé en ce que** ladite position déployée est une position de butée.

4. Appareil (1) selon l'une des revendications 1 à 3 **caractérisé en ce que** ladite position rétractée est une position de butée.

5. Appareil (1) selon l'une des revendications 1 à 4 **caractérisé en ce que** ladite position rétractée est une position stable.

6. Appareil (1) selon l'une des revendications 1 à 5 **caractérisé en ce que** l'organe de commande (6) s'étend, dans sa position déployée, à partir du couvercle (3) selon une direction moyenne majoritairement perpendiculaire au plan moyen d'extension du couvercle (3), et de façon encore plus préférentielle selon une direction sensiblement parallèle à la direction verticale (X-X').

7. Appareil (1) selon l'une des revendications 1 à 6 **caractérisé en ce que** ledit axe de pivotement (Y-Y') est perpendiculaire à la direction verticale (X-X').

8. Appareil (1) selon l'une des revendications 1 à 7 **caractérisé en ce qu'**il comprend un organe de préhension du couvercle (3) qui est attaché au couvercle (3) et est conçu pour être saisi manuellement afin de permettre la manipulation du couvercle (3) par son intermédiaire, ledit organe de préhension étant uniquement formé par ledit organe de commande (6) en position déployée.

9. Appareil (1) selon l'une des revendications 1 à 8 **caractérisé en ce que** ledit organe de commande (6) est, en position rétractée, conçu pour être sensiblement impossible à saisir manuellement pour manipuler le couvercle (3).

10. Appareil (1) selon l'une des revendications 1 à 9 **caractérisé en ce que** dans sa position rétractée, ledit organe de commande (6) s'étend à partir du couvercle (3) selon une direction moyenne majoritairement parallèle au plan moyen d'extension du couvercle (3).

11. Appareil (1) selon l'une des revendications 1 à 10 caractérisé en ce ledit organe de commande (6) comprend une anse (6A) qui fait saillie du couvercle (3) en position déployée, et est rabattue contre le couvercle (3) en position rétractée.

12. Appareil (1) selon la revendication 11 **caractérisé en ce que** ladite anse (6A) délimite un espace vide (6B) destiné à recevoir les doigts de l'utilisateur, le couvercle (3) présentant à sa surface un relief (7) conçu pour au moins partiellement combler ledit espace vide (6B) lorsque l'anse (6A) est rabattue contre le couvercle (3) en position rétractée, limitant ainsi la possibilité pour l'utilisateur d'attraper l'anse (6A) pour manipuler le couvercle (3).

13. Appareil (1) selon l'une des revendications 11 et 12 **caractérisé en ce que** ladite anse (6A) est une pièce arquée, en forme de boucle.

14. Appareil (1) selon l'une des revendications 1 à 13 **caractérisé en ce que** ledit organe de commande (6) présente sensiblement un contour en arc de cercle.

15. Appareil (1) selon l'une des revendications 11 à 13 **caractérisé en ce que** ledit axe de pivotement (Y-Y') s'étend selon une direction moyenne majoritairement parallèle au plan moyen d'extension du couvercle (3), ladite anse (6A) s'étendant selon un contour sensiblement hémicirculaire entre une première extrémité (60) et une deuxième extrémité (61) sensiblement traversées par ledit axe de pivotement (Y-Y').

16. Appareil (1) selon l'une des revendications 1 à 15 **caractérisé en ce que** ledit organe de commande (6) est pourvu d'une gorge (8) s'étendant sensiblement en arc de cercle, ledit appareil (1) comprenant en outre un organe de pilotage (9) de son fonctionnement monté mobile à rotation sur le couvercle (3), selon un axe de rotation passant sensiblement par le centre dudit arc de cercle et sensiblement perpendiculaire au plan moyen dans lequel s'étend ladite gorge (8) lorsque l'organe de commande (6) est en position rétractée, entre une première position dans laquelle ledit organe de pilotage (9) autorise la montée en pression de l'appareil (1) et une deuxième position dans laquelle il empêche sensiblement la montée en pression, ledit organe de pilotage (9) étant pourvu d'un verrou (11) conçu pour coopérer avec la gorge (8) de la façon suivante :
- ledit organe de commande (6) est conformé pour autoriser la pénétration du verrou (11) dans la gorge (8) uniquement lorsque l'organe de pilotage (9) se trouve dans sa deuxième position et que l'organe de commande (6) passe de sa position déployée à sa position rétractée ;
- une fois dans la gorge (8), le verrou (11) peut coulisser le long de cette dernière, autorisant ainsi l'organe de pilotage (9) à passer de sa deuxième position à sa première position, la présence du verrou (11) dans la gorge (8) interdisant toutefois à l'organe de commande (6) de retourner dans sa position déployée alors que l'organe de pilotage (9) se trouve dans sa première position.

17. Appareil (1) selon l'une des revendications 1 à 16 **caractérisé en ce que** l'organe de commande (6) est centré sur le couvercle (3).

18. Appareil (1) selon l'une des revendications 1 à 17 **caractérisé en ce que** ladite cuve (2) présente sensiblement une symétrie de révolution selon un axe (X-X') correspondant à la direction verticale, ledit axe de pivotement (Y-Y') étant sécant avec ledit axe (X-X') correspondant à la direction verticale.

19. Appareil (1) selon l'une des revendications 1 à 18 **caractérisé en ce que** ledit moyen de verrouillage / déverrouillage (4) comprend deux mâchoires (4A, 4B) montées mobiles en translation radiale sur et relativement au couvercle (3) par l'intermédiaire desdits bras entraîneurs correspondants (4C, 4D).

20. Appareil (1) selon la revendication 19 **caractérisé en ce que** les mâchoires (4A, 4B) sont montées, par l'intermédiaire desdits bras entraîneurs (4C, 4D), entre d'une part une position de verrouillage dans laquelle chaque mâchoire (4A, 4B) enserre le couvercle (3) et le bord supérieur roulé de la cuve (2) et d'autre part une position de déverrouillage, obtenue par déplacement centrifuge des mâchoires (4A, 4B) à partir de leur position de verrouillage, et dans laquelle les mâchoires (4A, 4B) ne sont plus en prise avec le bord roulé de la cuve (2), ce qui permet à l'utilisateur de désolidariser librement le couvercle (3) de la cuve (2).

21. Appareil (1) selon la revendication 20 **caractérisé en ce que** la position de verrouillage est une position de rappel.

22. Appareil (1) selon l'une des revendications 1 à 21 **caractérisé en ce que** chaque bras entraîneur (4C, 4D) s'étend entre une extrémité intérieure destinée à coopérer avec ledit organe de commande (6) du verrouillage / déverrouillage et une extrémité extérieure qui porte la mâchoire correspondante (4A, 4B).

23. Appareil (1) selon l'une des revendications 1 à 18 **caractérisé en ce que** lesdits bras entraîneurs (4C, 4D) sont montés mobiles en translation radiale sur et relativement au couvercle (3) entre d'une part une position de verrouillage et d'autre part une position de déverrouillage, chaque bras entraîneur (4C, 4D) s'étendant entre une extrémité intérieure destinée à coopérer avec ledit organe de commande (6) du verrouillage / déverrouillage et une extrémité extérieure destinée à pénétrer dans des lumières correspondantes ménagées dans la cuve (2), à la manière d'un système pêne/gâche.

## Patentansprüche

1. Druckkochgerät (1) für Nahrungsmittel, umfassend einen Behälter (2), einen Deckel (3), ein Mittel zur Verriegelung/Entriegelung (4) des Deckels (3) in Bezug zum Behälter (2) und ein Element zur Steuerung (6) der Verriegelung/Entriegelung des Deckels (3) in Bezug zum Behälter (2), **dadurch gekennzeichnet, dass** das Steuerelement (6) auf dem Deckel (3) entlang einer Schwenkachse (Y-Y') schwenkbar montiert ist, zwischen einerseits einer ausgeklappten Position, die der Entriegelung des Deckels (3) entspricht und in der das Steuerelement (6) dafür ausgelegt ist, manuell ergriffen zu werden, um die Handhabung des Deckels (3) zu ermöglichen, und andererseits einer eingeklappten Position, die der Verriegelung des Deckels (3) entspricht und in der das Steuerelement (6) dafür ausgelegt ist, schwieriger als in der ausgeklappten Position manuell ergriffen zu werden, wobei das Verriegelungs-/Entriegelungsmittel (4) Klemmbacken oder Segmente umfasst, die in radialer Translation beweglich auf und in Bezug zu dem Deckel (3) entlang einer zu der Schwenkachse (Y-Y') parallelen Translationsachse mit Hilfe von entsprechenden Antriebsarmen (4C, 4D) montiert sind, die sich diametral entgegengesetzt bezüglich der allgemeinen Symmetrieachse (X-X') des Gerätes (1) erstrecken, wobei dieses Letztere Nocken (12, 13) und ein Steuerungszwischenstück (14) umfasst, das dafür ausgelegt ist, von den Nocken (12, 13) unter der Wirkung der Schwenkung des Steuerelements (6) von seiner eingeklappten Position zu seiner ausgeklappten Position zurückgeschoben zu werden, wobei das Steuerungszwischenstück (14) mit schrägen Schlitzen (14A, 14B) versehen ist, die mit Vorsprüngen (15, 16) zusammenwirken, die jeweils mit den Antriebsarmen (4C, 4D) verbunden sind, sodass die Translationsbewegung der Steuerungszwischenplatte (14) über die Schlitze (14A, 14B) die radiale Verschiebung der Vorsprünge (15, 16) und somit der Antriebsarme (4C, 4D), an denen diese Letzteren jeweils befestigt sind, zur Folge hat.

2. Gerät (1) nach Anspruch 1, **dadurch gekennzeichnet, dass** die ausgeklappte Position eine stabile Position ist.

3. Gerät (1) nach Anspruch 1 oder 2, **dadurch gekennzeichnet, dass** die ausgeklappte Position eine Anschlagposition ist.

4. Gerät (1) nach einem der Ansprüche 1 bis 3, **dadurch gekennzeichnet, dass** die eingeklappte Position eine Anschlagposition ist.

5. Gerät (1) nach einem der Ansprüche 1 bis 4, **dadurch gekennzeichnet, dass** die eingeklappte Position eine stabile Position ist.

6. Gerät (1) nach einem der Ansprüche 1 bis 5, **dadurch gekennzeichnet, dass** sich das Steuerelement (6) in seiner ausgeklappten Position vom Deckel (3) aus in einer mittleren Richtung erstreckt, die überwiegend senkrecht zur mittleren Ausdehnungsebene des Deckels (3) ist, und besonders bevorzugt in einer Richtung, die im Wesentlichen parallel zur vertikalen Richtung (X-X') ist.

7. Gerät (1) nach einem der Ansprüche 1 bis 6, **dadurch gekennzeichnet, dass** die Schwenkachse (Y-Y') senkrecht zur vertikalen Richtung (X-X') ist.

8. Gerät (1) nach einem der Ansprüche 1 bis 7, **dadurch gekennzeichnet, dass** es ein Element zum Greifen des Deckels (3) umfasst, das am Deckel (3) befestigt ist und dafür ausgelegt ist, manuell ergriffen zu werden, um die Handhabung des Deckels (3) mit seiner Hilfe zu ermöglichen, wobei das Element zum Greifen nur von dem Steuerelement (6) in der ausgeklappten Position gebildet wird.

9. Gerät (1) nach einem der Ansprüche 1 bis 8, **dadurch gekennzeichnet, dass** das Steuerelement (6) so gestaltet ist, dass es in der eingeklappten Position im Wesentlichen unmöglich ist, es manuell zu ergreifen, um den Deckel (3) zu handhaben.

10. Gerät (1) nach einem der Ansprüche 1 bis 9, **dadurch gekennzeichnet, dass** sich das Steuerelement (6) in seiner eingeklappten Position vom Deckel (3) aus in einer mittleren Richtung erstreckt, die überwiegend parallel zur mittleren Ausdehnungsebene des Deckels (3) ist.

11. Gerät (1) nach einem der Ansprüche 1 bis 10, **dadurch gekennzeichnet, dass** das Steuerelement (6) einen Henkel (6A) umfasst, der in der ausgeklappten Position aus dem Deckel (3) herausragt und in der eingeklappten Position an den Deckel (3) angelegt ist.

12. Gerät (1) nach Anspruch 11, **dadurch gekennzeichnet, dass** der Henkel (6A) einen Leerraum (6B) begrenzt, der dazu bestimmt ist, die Finger des Benutzers aufzunehmen, wobei der Deckel (3) auf seiner Oberfläche ein Relief (7) aufweist, das dafür ausgelegt ist, wenigstens teilweise den Leerraum (6B) auszufüllen, wenn der Henkel (6A) in der eingeklappten Position an den Deckel (3) angelegt ist, wodurch für den Benutzer die Möglichkeit eingeschränkt wird, den Henkel (6A) zu greifen, um den Deckel (3) zu handhaben.

13. Gerät (1) nach einem der Ansprüche 11 und 12, **dadurch gekennzeichnet, dass** der Henkel (6A) ein bogenförmig gekrümmtes Teil von der Form eines Bügels ist.

14. Gerät (1) nach einem der Ansprüche 11 bis 13, **dadurch gekennzeichnet, dass** das Steuerelement (6) im Wesentlichen eine kreisbogenförmige Kontur aufweist.

15. Gerät (1) nach einem der Ansprüche 11 bis 13, **dadurch gekennzeichnet, dass** sich die Schwenkachse (Y-Y') in einer zur mittleren Ausdehnungsebene des Deckels (3) überwiegend parallelen mittleren Richtung erstreckt, wobei sich der Henkel (6A) entlang einer im Wesentlichen halbkreisförmigen Kontur zwischen einem ersten Ende (60) und einen zweiten Ende (61) erstreckt, die im Wesentlichen von der Schwenkachse (Y-Y') durchquert werden.

16. Gerät (1) nach einem der Ansprüche 11 bis 15, **dadurch gekennzeichnet, dass** das Steuerelement (6) mit einer Rille (8) versehen ist, die sich im Wesentlichen kreisbogenförmig erstreckt, wobei das Gerät (1) ferner ein Element (9) zur Regelung seines Betriebs umfasst, das auf dem Deckel (3) drehbeweglich um eine Drehachse montiert ist, die im Wesentlichen durch den Mittelpunkt des Kreisbogens verläuft und im Wesentlichen senkrecht zu der mittleren Ebene ist, in der sich die Rille (8) erstreckt, wenn sich das Steuerelement (6) in der eingeklappten Position befindet, und zwar zwischen einer ersten Position, in der das Regelungselement (9) den Druckanstieg des Gerätes (1) ermöglicht, und einer zweiten Position, in der es im Wesentlichen den Druckanstieg verhindert, wobei das Regelungselement (9) mit einem Riegel (11) versehen ist, der dafür ausgelegt ist, mit der Rille (8) folgendermaßen zusammenzuwirken:
- das Steuerelement (6) ist dafür ausgebildet, das Eindringen des Riegels (11) in die Rille (8) nur dann zu gestatten, wenn sich das Regelungselement (9) in seiner zweiten Position befindet, und das Steuerelement (6) von seiner ausgeklappten Position in seine eingeklappte Position übergeht;
- wenn er sich in der Rille (8) befindet, kann der Riegel (11) entlang derselben gleiten, wodurch er gestattet, dass das Regelungselement (9) von seiner zweiten Position in seine erste Position übergeht, wobei das Vorhandensein des Riegels (11) in der Rille (8) jedoch das Steuerelement (6) daran hindert, in seine ausgeklappte Position zurückzukehren, während sich das Regelungselement (9) in seiner ersten Position befindet.

17. Gerät (1) nach einem der Ansprüche 1 bis 16, **dadurch gekennzeichnet, dass** das Steuerelement (6) auf dem Deckel (3) zentriert ist.

18. Gerät (1) nach einem der Ansprüche 1 bis 17, **dadurch gekennzeichnet, dass** der Behälter (2) im Wesentlichen eine Rotationssymmetrie bezüglich einer der vertikalen Richtung entsprechenden Achse (X-X') aufweist, wobei die Schwenkachse (Y-Y') die der vertikalen Richtung entsprechende Achse (X-X') schneidet.

19. Gerät (1) nach einem der Ansprüche 1 bis 18, **dadurch gekennzeichnet, dass** das Mittel zur Verriegelung/Entriegelung (4) zwei Klemmbacken (4A, 4B) umfasst, die in radialer Translation beweglich auf und in Bezug zu dem Deckel (3) mithilfe der entsprechenden Antriebsarme (4C, 4D) montiert sind.

20. Gerät (1) nach Anspruch 19, **dadurch gekennzeichnet, dass** die Klemmbacken (4A, 4B) mithilfe der Antriebsarme (4C, 4D) zwischen einerseits einer Verriegelungsposition, in der jede Klemmbacke (4A, 4B) den Deckel (3) und den oberen gerollten Rand des Behälters (2) umschließt, und andererseits einer Entriegelungsposition montiert sind, die durch Zentrifugalbewegung der Klemmbacken (4A, 4B) aus ihrer Verriegelungsposition erhalten wird und in der die Klemmbacken (4A, 4B) nicht mehr mit dem gerollten Rand des Behälters (2) in Eingriff stehen, was dem Benutzer ermöglicht, den Deckel (3) frei von dem Behälter (2) zu lösen.

21. Gerät (1) nach Anspruch 20, **dadurch gekennzeichnet, dass** die Verriegelungsposition eine Rückstellposition ist.

22. Gerät (1) nach einem der Ansprüche 1 bis 21, **dadurch gekennzeichnet, dass** sich jeder Antriebsarm (4C, 4D) zwischen einem inneren Ende, das dazu bestimmt ist, mit dem Element zur Steuerung (6) der Verriegelung/Entriegelung zusammenzuwirken, und einem äußeren Ende erstreckt, das die entsprechende Klemmbacke (4A, 4B) trägt.

23. Gerät (1) nach einem der Ansprüche 1 bis 18, **dadurch gekennzeichnet, dass** die Antriebsarme (4C, 4D) in radialer Translation beweglich auf und in Bezug zu dem Deckel (3) zwischen einerseits einer Verriegelungsposition und andererseits einer Entriegelungsposition montiert sind, wobei sich jeder Antriebsarm (4C, 4D) zwischen einem inneren Ende, das dazu bestimmt ist, mit dem Element zur Steuerung (6) der Verriegelung/Entriegelung zusammenzuwirken, und einem äußeren Ende erstreckt, das dazu bestimmt ist, in im Behälter (2) ausgebildete entsprechende Schlitze einzudringen, in der Art eines Systems Schließblech/Riegel.

## Claims

1. Appliance (1) for cooking food under pressure, comprising a vessel (2), a lid (3), a locking / unlocking means (4) for locking / unlocking of the lid (3) in relation to the vessel (2), and a member (6) for controlling the locking / unlocking of the lid (3) in relation to the vessel (2), **characterised in that** said control member (6) is mounted so as to pivot on the lid (3) about a pivot axis (Y-Y') between firstly a deployed position corresponding to the unlocking of the lid (3) and in which said control member (6) is designed so as to be gripped manually to allow manipulation of the lid (3), and secondly a retracted position corresponding to the locking of the lid (3) and in which said control member (6) is designed so as to be more difficult to grip manually than it is in the deployed position, said locking / unlocking means (4) having jaws or segments mounted so as to be able to move in radial translation on and relative to the lid (3) along an axis parallel to said pivot axis (Y-Y') by means of corresponding drive arms (4C, 4D) extending so as to be diametrically opposed facing the general symmetry axis (X-X') of the appliance (1), the latter comprising cams (12, 13) and an intermediate control part (14) designed to be pushed away by the cams (12, 13) under the effect of the control member (6) pivoting from its retracted position to its deployed position, said intermediate control part (14) being provided with slanting slots (14A, 14B) that co-operate with lugs (15, 16) connected to respective ones of the drive arms (4C, 4D), so that the intermediate control plate (14) moving in translation acts, via the slots (14A, 14B), to cause the lugs (15, 16) to move radially, and thus to cause the drive arms (4C, 4D) to which said lugs are respectively attached to move radially.

2. Appliance (1) according to claim 1, **characterised in that** said deployed position is a stable position.

3. Appliance (1) according to claim 1 or 2, **characterised in that** said deployed position is an abutment position.

4. Appliance (1) according to one of claims 1 to 3, **characterised in that** said retracted position is an abutment position.

5. Appliance (1) according to one of claims 1 to 4, **characterised in that** said retracted position is a stable position.

6. Appliance (1) according to one of claims 1 to 5, **characterised in that**, in its deployed position, said control member (6) extends from the lid (3) in an average direction that is mainly perpendicular to the extension midplane of the lid (3), and even more preferably, in a direction that is substantially parallel to the vertical axis (X-X').

7. Appliance (1) according to one of claims 1 to 6, **characterised in** said pivot axis (Y-Y') is substantially perpendicular to the vertical axis (X-X').

8. Appliance (1) according to one of claims 1 to 7, **characterised in that** it comprises a member for gripping the lid (3) that is attached to the lid (3) and is designed so as to be gripped manually to allow manipulation of the lid (3) by means of same, said gripping member being solely formed by said control member (6) in the deployed position.

9. Appliance (1) according to one of claims 1 to 8, **characterised in that** said control member (6) is, in the retracted position, designed so as to be substantially impossible to grip manually in order to manipulate the lid (3).

10. Appliance (1) according to one of claims 1 to 9, **characterised in that**, in its retracted position, said control member (6) extends from the lid (3) in an average direction mainly parallel to the extension midplane of the lid (3).

11. Appliance (1) according to one of claims 1 to 10, **characterised in that** said control member (6) comprises a handle (6A) that projects from the lid (3) in the deployed position and is folded against the lid (3) in the retracted position.

12. Appliance (1) according to claim 11, **characterised in that** said handle (6A) delimits an empty space (6B) intended to receive the fingers of the user, the lid (3) having on its surface a relief (7) designed so as to at least partially fill in said empty space (6B) when the handle (6A) is folded against the lid (3) in the retracted position, thus limiting the possibility of the user grasping the handle (6A) in order to manipulate the lid (3).

13. Appliance (1) according to one of claims 11 and 12, **characterised in that** said handle (6A) is a loop-shaped arcuate piece.

14. Appliance (1) according to one of claims 1 to 13, **characterised in that** said control member (6) has substantially a contour in an arc of a circle.

15. Appliance (1) according to one of claims 11 to 13, **characterised in that** said pivot axis (Y-Y') extends itself in an average direction mainly parallel to the extension midplane of the lid (3), said handle (6A) extending in a substantially semicircular contour between a first end (60) and a second end (61) that have said pivot axis (Y-Y') substantially passing through them.

16. Appliance (1) according to one of claims 1 to 15, **characterised in that** said control member (6) is provided with a groove (8) extending substantially in an arc of a circle, said appliance (1) further comprising a member (9) controlling its functioning mounted so as to be able to rotate on the lid (3), about a rotation axis passing substantially through the centre of said arc of a circle and substantially perpendicular to the midplane in which said groove (8) extends when the control member (6) is in the retracted position, between a first position in which said control member (9) allows the increase in pressure of the appliance (1) and a second position in which it substantially prevents the pressure rise, said control member (9) being provided with a latch (11) designed so as to cooperate with the groove (8) in the following fashion:
- said control member (6) is conformed so as to enable the latch (11) to enter the groove (8) only when the control member (9) is situated in its second position and the control member (6) passes from its deployed position to its retracted position;
- once in the groove (8), the latch (11) can slide along the latter, thus enabling the control member (9) to pass from its second position to its first position, the presence of the latch (11) in the groove (8) however preventing the control member (6) from returning to its deployed position when the control member (9) is in its first position.

17. Appliance (1) according to one of claims 1 to 16, **characterised in that** the control member (6) is centered on the lid (3).

18. Appliance (1) according to one of claims 1 to 17, **characterised in that** said vessel (2) is substantially circularly symmetrical about an axis (X-X') corresponding to the vertical direction, wherein said pivot axis (Y-Y') intersects said axis (X-X') corresponding to the vertical direction.

19. Appliance (1) according to one of claims 1 to 18, **characterised in that** said locking / unlocking means (4) comprises two jaws (4A, 4B) mounted so as to be able to move in radial translation on and relative to the lid (3) by means of said corresponding drive arms (4C, 4D).

20. Appliance (1) according to claim 19, **characterised in that** the jaws (4A, 4B) are mounted, by means of the drive arms (4C, 4D), between firstly a locking position in which each jaw (4A, 4B) grips the lid (3) and the rolled top edge of the vessel (2) and secondly an unlocking position, obtained by centrifugal movement of the jaws (4A, 4B) from their locking position, and in which the jaws (4A, 4B) are no longer in engagement with the rolled edge of the vessel (2), which enables the user to freely disconnect the lid (3) from the vessel (2).

21. Appliance (1) according to claim 20, **characterised in that** the locking position is a return position.

22. Appliance (1) according to one of claims 1 to 21, **characterised in that** each drive arm (4C, 4D) extends between an internal end intended to cooperate with said member (6) for controlling the locking / unlocking and an external end that carries the corresponding jaw (4A, 4B).

23. Appliance (1) according to one of claims 1 to 18, **characterised in that** said drive arms (4C, 4D) are mounted so as to be able to move in radial translation on and relative to the lid (3) between firstly a locking position and secondly an unlocking position, wherein each drive arm (4C, 4D) extends between an inner end designed to co-operate with said locking / unlocking control member (6) and an outer end that is designed to penetrate into corresponding slots provided in the vessel, in the manner of a bolt-and-keeper system.
